## Europäisches Patentamt

## European Patent Office

## Office européen des brevets

(19)

(11) Veröffentlichungsnummer: **0 097 941**
**B1**

(12) **EUROPÄISCHE PATENTSCHRIFT**

(45) Veröffentlichungstag der Patentschrift:
30.03.88

(51) Int. Cl.⁴: **A 61 C 13/30**

(21) Anmeldenummer: **83106224.5**

(22) Anmeldetag: **25.06.83**

(54) **Stabförmige Vorrichtung zur Befestigung einer künstlichen Zahnkrone auf ein- oder mehrwurzelige Zähne.**

(30) Priorität: **29.06.82 DE 3224112**
**21.09.82 DE 3234834**
**13.11.82 DE 3242135**

(43) Veröffentlichungstag der Anmeldung:
**11.01.84 Patentblatt 84/2**

(45) Bekanntmachung des Hinweises auf die Patenterteilung:
**30.03.88 Patentblatt 88/13**

(84) Benannte Vertragsstaaten:
**AT BE CH DE FR GB IT LI LU NL SE**

(56) Entgegenhaltungen:
**BE - A - 766 428**
**CH - A - 370 191**
**FR - A - 1 478 557**
**FR - A - 2 230 333**
**FR - A - 2 347 027**
**US - A - 2 453 696**
**US - A - 2 536 669**
**US - A - 3 962 787**

(73) Patentinhaber: **Hahn, Richard, dr. dr., C. v.**
**Stauffenbergstrasse 21, D-6800 Mannheim 1 (DE)**

(72) Erfinder: **Hahn, Richard, dr. dr., C. v.**
**Stauffenbergstrasse 21, D-6800 Mannheim 1 (DE)**

(74) Vertreter: **Ratzel, Gerhard, Dr., Seckenheimer**
**Strasse 36a, D-6800 Mannheim 1 (DE)**

**Beschreibung**

Die Erfindung betrifft eine stabförmige Vorrichtung aus Reintitan oder Titanlegierungen zum Befestigen einer künstlichen Zahnkrone auf bzw. in einer Zahnwurzel mit einem Kopf und einem Stift, wobei der Kopf an seiner Unterseite rundherum den Stift überragt.

Es ist bekannt, dass zur Erhaltung des Zahnes und zur Anbringung von künstlichen Zahnkronen der Wurzelkanal des betreffenden Zahnes durchgängig gemacht und erweitert wird. Normalerweise wird dieser Kanal und die Schnittfläche der Zahnwurzel mit einem Kunststoff ausgefüllt und dadurch als Negativ abgebildet. Nachdem hierdurch erhaltenen Modell wird von einem Zahntechniker ein Stiftaufbau in einer Goldlegierung gegossen, der dann in einer zweiten Sitzung mit Zement oder dergleichen in den ausgebohrten Wurzelkanal unverändert eingesetzt wird.

Zwischenzeitlich muss der Patient mit einer provisorischen Stiftkrone versorgt werden. Die weiteren Nachteile dieses Verfahrens bestehen in folgendem:

Es wird nach dem konventionellen Prinzip der Stift an den Zahn angepasst. Besser ist es jedoch, den Zahn an den Stift anzupassen. Damit kann der Stift aber auch sofort an die Stellung der benachbarten Zähne und an die Zähne des Gegenkiefers angepasst werden.

Um dieses Grundprinzip der vollständigen Zahnanpassung an den bereits vorhandenen Stift in einem Arbeitsgang zu gewährleisten, müssen folgende Bedingungen erfüllt werden:

1. Es muss immer eine zur Längsachse des Zahnes quere oder schräggestellte und genau plane Abtrennung der Zahnkrone von der Zahnwurzel erfolgen.

2. Es muss eine operative Freilegung der Wurzelspitze erfolgen und diese Wurzelspitze vorschriftsmässig quer abgetrennt werden (sog. Wurzelspitzenresektion nach PARTSCH).

3. Der Kanal des verbleibenden Wurzelstumpfes muss exakt so weit mit DIN-genormten Instrumenten erweitert werden, bis alle weiche Substanz des Zahnbeins entfernt ist.

FR-A-14 78 557 beschreibt eine stabförmige Vorrichtung aus Titan zum Befestigen von Zahnprothesen, bestehend aus einem Kopf und einem kegelförmigen Stift, wobei der Kopf an seiner Unterseite rundherum den Stift überragt, und wobei der Stift auf einem Teil seiner Länge eine aus einem Gewinde gebildete Rauhzone und zwischen dem Kopf und der Rauhzone eine glatte Biegezone aufweist.

Die Vorrichtungen gemäss dem Stand der Technik weisen die Nachteile auf, dass oftmals eine unzureichende Passgenauigkeit und Friktion beim Einsetzen in den Wurzelkanal erreicht wird, und dass viel Befestigungszement benötigt wird.

Demgegenüber liegt vorliegender Erfindung die Aufgabe zugrunde, eine stabförmige Vorrichtung zum Befestigen einer künstlichen Zahnkrone der eingangs genannten Art zu liefern, die dauerhaft einzusetzen ist und bei der eine hohe Passgenauigkeit (Friktion) des Stabes beim Einsetzen in den Wurzelkanal erreicht wird und die unter Verwendung von möglichst wenig Befestigungszement in den Wurzelkanal eingesetzt werden kann.

Der Erfindung liegt weiterhin die Aufgabe zugrunde, eine stabförmige Vorrichtung der eingangs genannten Art zu liefern, die gegen Drehbewegungen unveränderlich ist und fest aufsitzt.

Diese Aufgaben werden erfindungsgemäss bei einer stabförmigen Vorrichtung der Eingangs genannten Art dadurch gelöst, dass die den Stift überragende Unterseite des Kopfes scharfkantig-schneidende Aufrauhungen aufweist, und dass die Rauhzone aus rhombenförmigen Schneiden oder aus parallel, senkrecht zur Längsachse des kegelförmigen Stiftes verlaufende, ringförmigen Schneiden besteht.

Ein Vorteil dieser erfindungsgemässen stabförmigen Vorrichtung besteht darin, dass die die Rauhzone bildenden Schneiden die Wände des ausgebohrten Wurzelkanals ausschmirgeln und aufgrund der Rauhigkeit der Stift nach der Einführung im Wurzelkanal bei grösster Passgenauigkeit fest sitzt.

Noch ein weiterer Vorteil wird dadurch erzielt, dass die Unterseite des Kopfes scharfkantig-schneidende Aufrauhungen aufweist. Durch Drehbewegung des Kopfstiftes um die Stiftachse passt sich die Kopfunterfläche an die Stumpfoberfläche an. Hierdurch lässt sich ein streng formschlüssiger Kontakt mit der abgeschliffenen Zahnwurzel erzielen, d.h. der Kopf sitzt unveränderbar fest auf der Schnittfläche des Zahnes auf. Bei einer glatten Unterseite des Kopfes wäre dies nicht möglich, da geringe Stellungsunterschiede zwischen der Oberseite der abgeschliffenen Zahnwurzel und der Unterseite des Kopfes niemals ganz auszuschliessen sind.

Vorteilhafterweise ist der Stab einstückig aus Reintitan oder Titanlegierungen. Dieses Material hat sich wegen seiner chemischen und physikalischen Eigenschaften als besonders gut verträglich erwiesen. Ferner besteht der Vorteil des Titan darin, dass es sich ausserordentlich gut bearbeiten lässt.

Besondere Ausführungsformen sind dadurch gekennzeichnet, dass der Übergang vom Kopf zum Stift bogenförmig verstärkt ist, und dass sie eine glatte Abschlussrandzone aufweist.

Ein Vorteil dieser Ausführungsform liegt in der glatten Abschlussrandzone. Dieser Teil presst sich in das Kanalende und schiebt dabei allen Zement beim Einsetzen weg. Dies bewirkt einen maximalen Abschluss des Wurzelkanals an der Wurzelspritze (ohne Zement). Deswegen muss ein Stift schon vor dem Einzementieren in seiner Länge bestimmt und eventuell etwas gekürzt werden. Dadurch ist eine mögliche Lockerung des Befestigungszementes durch Beschleifen des Stiftendes ausgeschlossen, da der Wurzelstumpf auch in seiner Länge an den Stift bereits angepasst ist.

Im folgenden wird die Erfindung anhand von mehreren Ausführungswege darstellenden Zeichnungen näher erläutert. Hierbei gehen aus den Zeichnungen und ihrer Beschreibung weitere erfindungswesentliche Merkmale und Vorteile der Erfindung hervor.

Es zeigen:

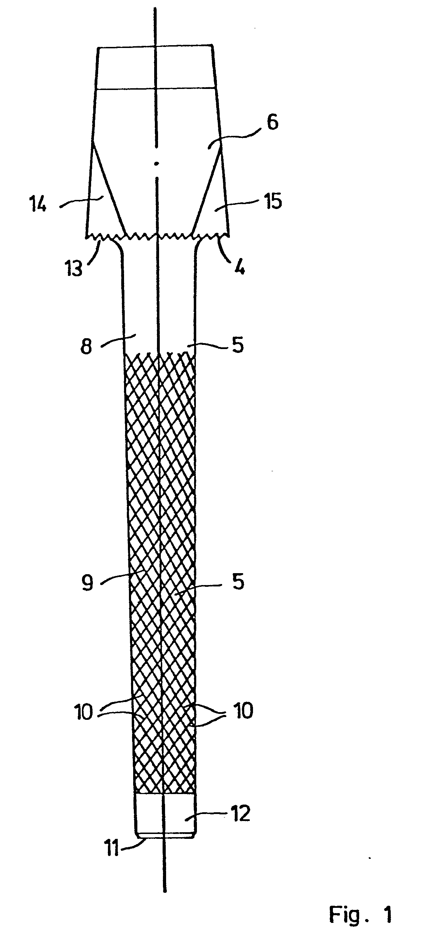

Figur 1 eine Vorderansicht der erfindungsgemässen Vorrichtung,

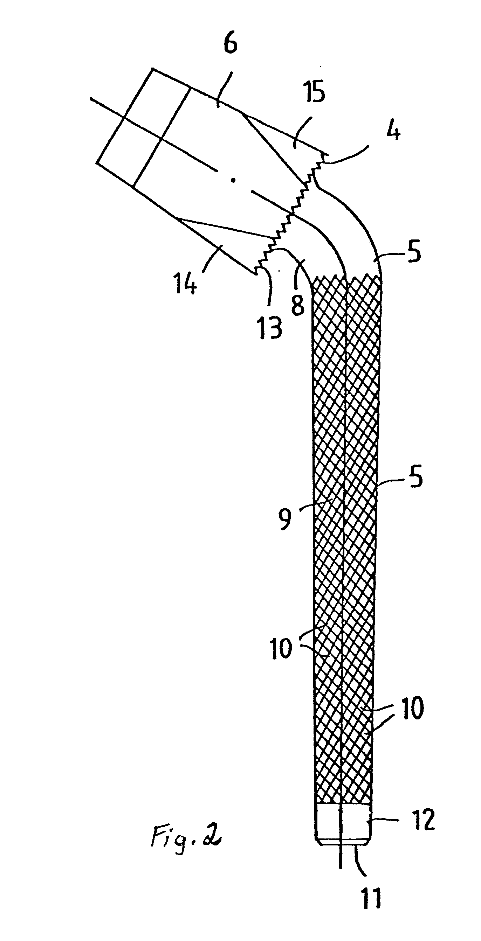

Figur 2 wie 1, nach einer möglichen Abbiegung des Kopfes nach links,

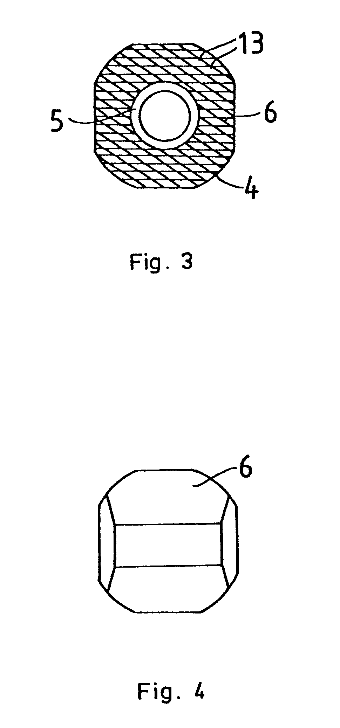

Figur 3 die Unteransicht des Kopfes gemäss Figur 1 und

Figur 4 die Aufsicht auf den Kopf gemäss Figur 1

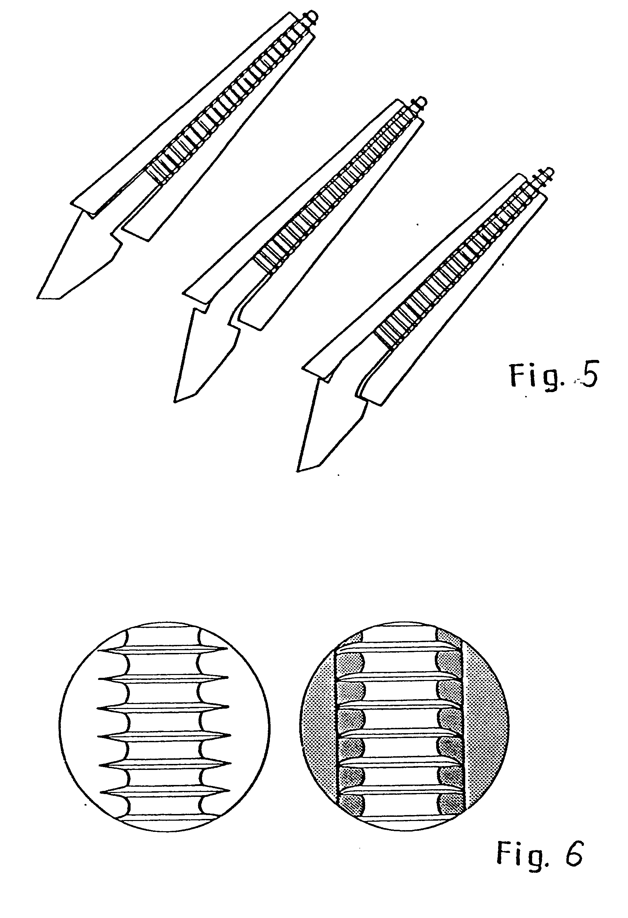

Figur 5 zeigt den Stiftaufbau in der Zahnwurzel

Figur 6 zeigt in Vergrösserung im Detail die scharfkantig-schneidenden Aufrauhungen des Stifts.

Die Figuren 7 bis 18 zeigen die Stellungskorrektur eines Oberkieferzahns (seitliche Ansicht) mittels der erfindungsgemässen stabförmigen Vorrichtung. Dabei zeigen im einzelnen:

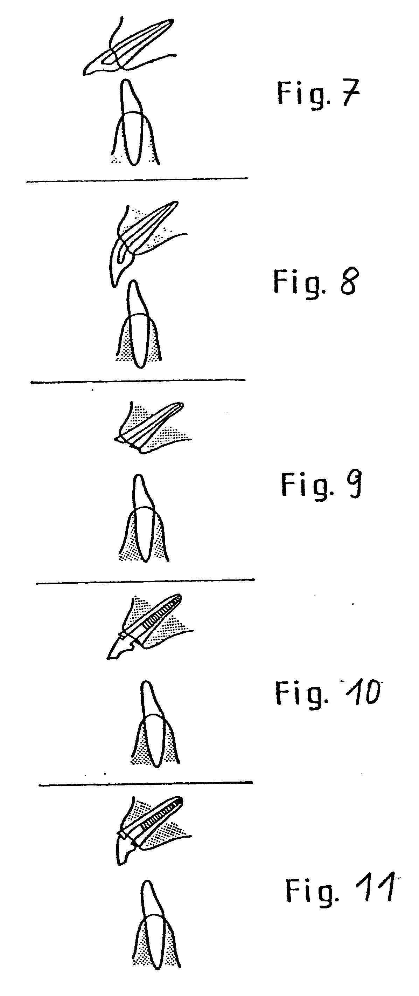

Figur 7 den Fehlstand,

Figur 8 die erwünschte Stellung

Figur 9 a) Abtrennen der Krone

        b) Erweiterung des Wurzelkanals

        c) Abtrennen der Wurzelspitze

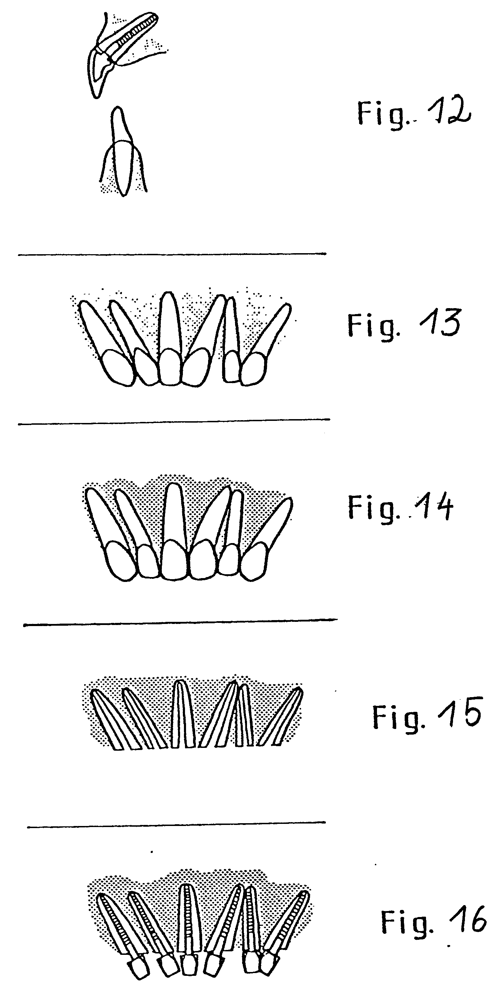

Figur 10 Einsetzen und Einpassen des Stiftaufbaus bis zum Anschlag

Figur 11 Abbiegung des Stiftkopfes und Einpressen des Stiftaufbaus in den Wurzelkanal

Figur 12 endgültiger Zustand in der erwünschten Zahnkronenstellung

Figur 13 Fehlstand (vorher)

Figur 14 erwünschte Stellung (nachher)

Figur 15 a) Abtrennen aller Kronen

        b) Erweiterung der Wurzelkanäle

        c) Abtrennen der Wurzelspitzen

Figur 16 Einsetzen und Einpassen der Stiftaufbauten bis zum Anschlag

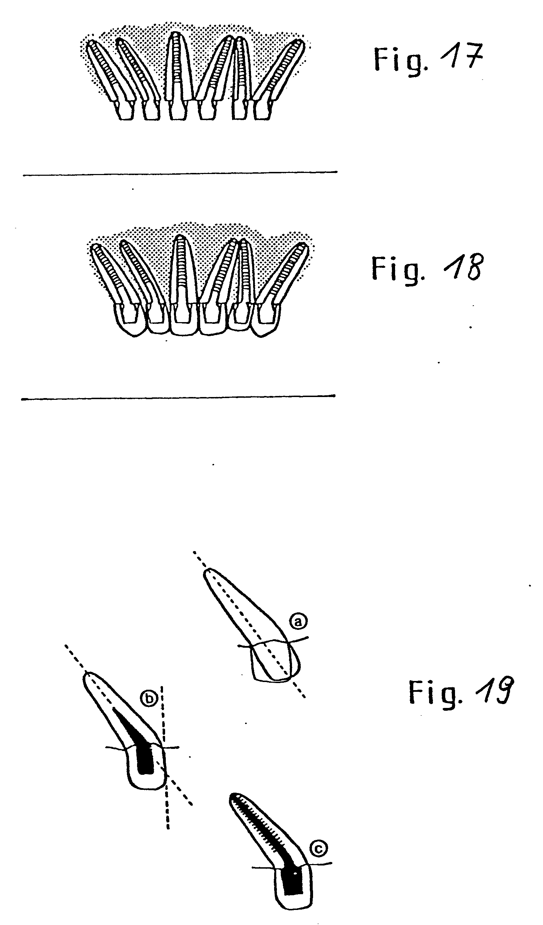

Figur 17 Abbiegung aller Stiftaufbauten und Einsetzen und Einpressen bis zur maximalen Passgenauigkeit

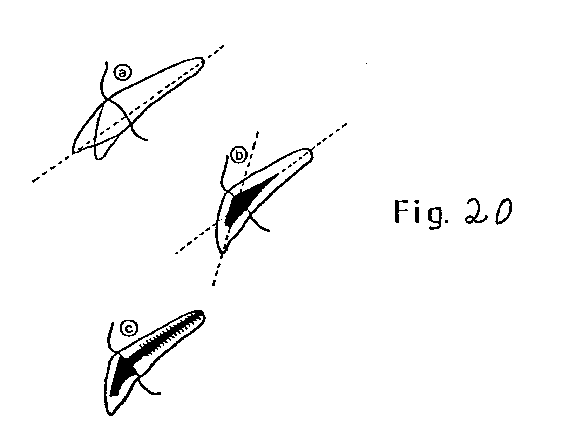

Figur 18 endgültiger Zustand in der erwünschten Zahnkronenstellung.

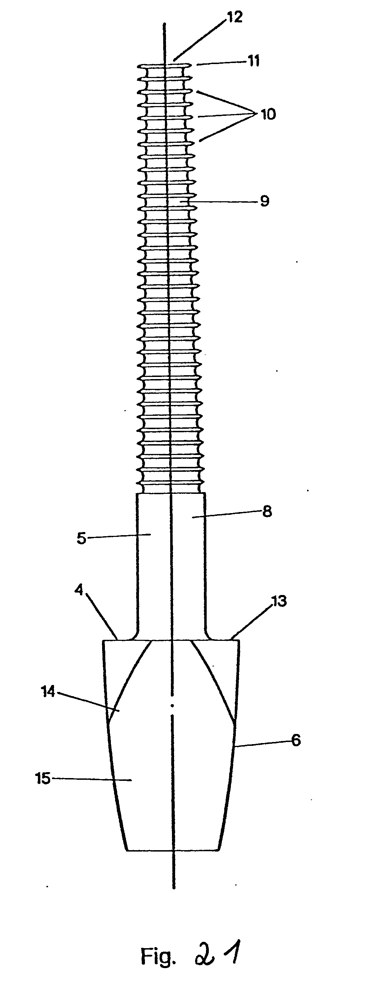

Figur 19 und Figur 20 zeigen einen Vergleich der bisherigen Technik zur Anwendungstechnik des Erfindungsgegenstandes, dabei zeigt Figur 19 im einzelnen:

Ansicht des Zahnes von vorne.

a   Vorhandene Zahnstellung. Dünn gezeichnet: Erwünschte Zahnkronenstellung.

b   Bisherige Technik: Fertig abgebogener Stiftaufbau (zu kurz, keine stabile Befestigung, keine Korrekturmöglichkeit, Gefahr des Verlustes).

c   Neue Technik: Stiftaufbau aus Titan (füllt gesamte Wurzellänge aus; stabile Retentionsschneiden über ⅔ des Stiftes; keine Schraube; stabile Befestigung über gesamte Stiftlänge, genaue Korrekturmöglichkeit, Stiftaufbau kaum entfernbar).

Figur 20 zeigt die Ansicht des Zahnes von der Seite.

a  b  c wie bei 19.

1 und 2 ergibt Kombinationsmöglichkeit in jedem Winkel.

Figur 21 zeigt die Darstellung des Stiftaufbaus von vorne.

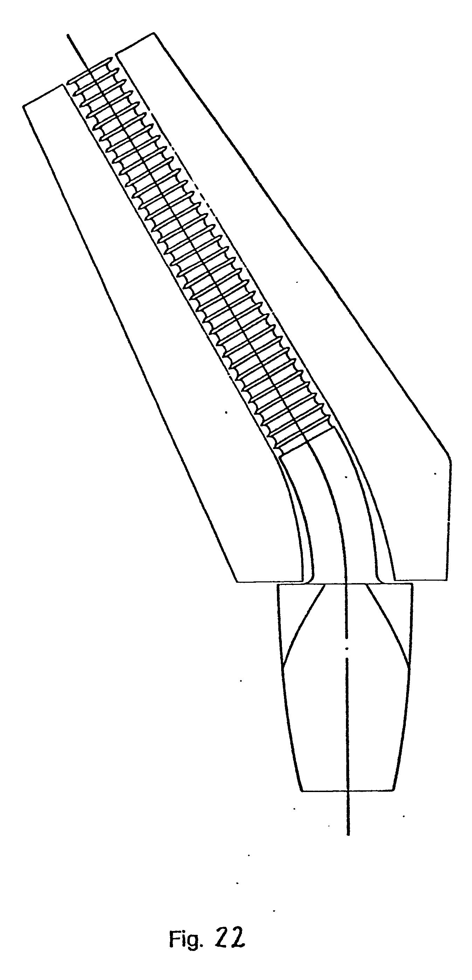

Figur 22 zeigt die Vorderansicht des Stiftaufbaus in der Zahnwurzel (Kopf gebogen nach links)

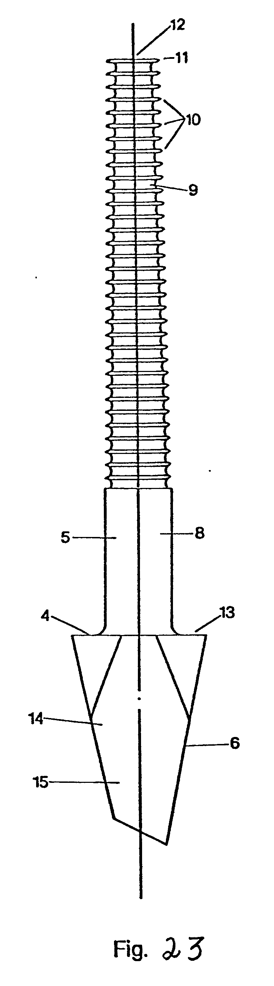

Figur 23 zeigt die Darstellung des Stiftaufbaus von der Seite.

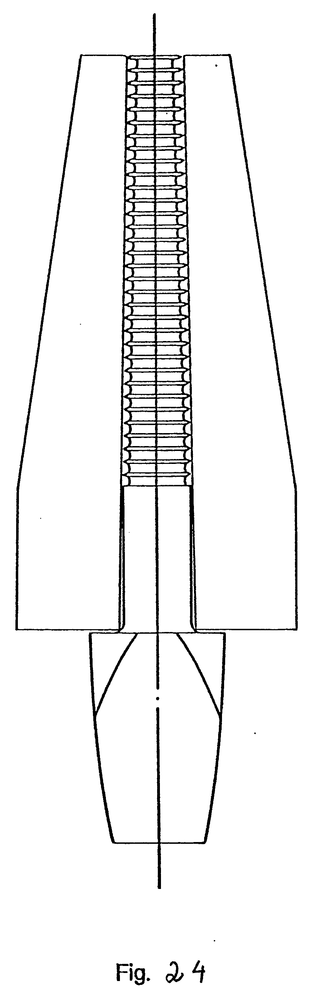

Figur 24 zeigt die Vorderansicht des Stiftaufbaus in der Zahnwurzel (Kopf nicht gebogen).

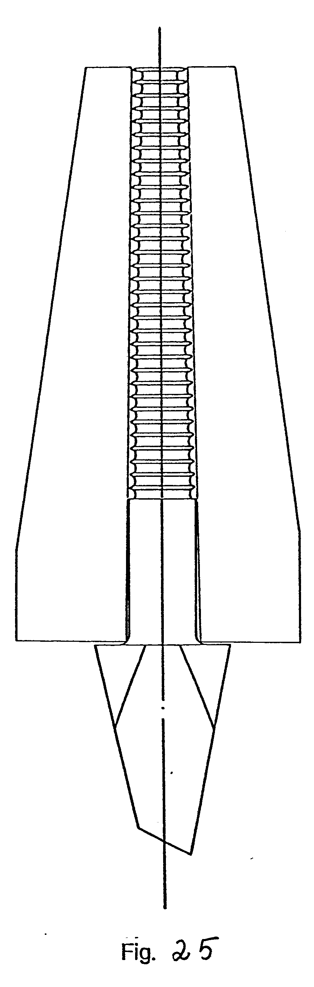

Figur 25 zeigt Seitenansicht des Stiftaufbaus in der Zahnwurzel (Kopf nicht gebogen)

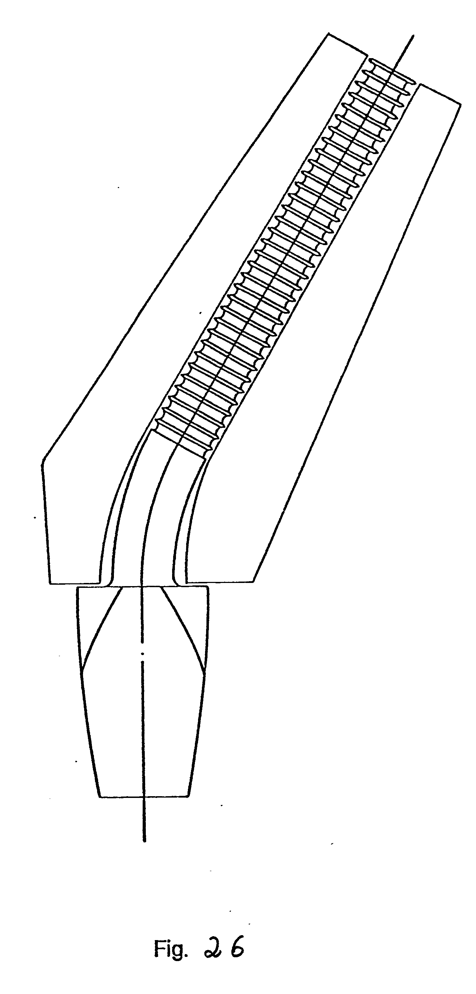

Figur 26 zeigt Vorderansicht des Stiftaufbaus in der Zahnwurzel (Kopf gebogen nach rechts)

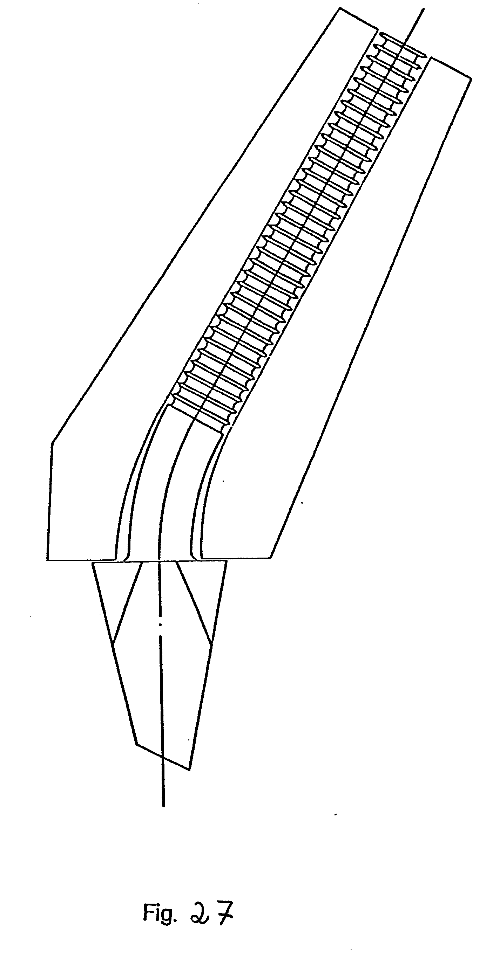

Figur 27 zeigt Seitenansicht des Stiftaufbaus in der Zahnwurzel (Kopf nach vorne gebogen)

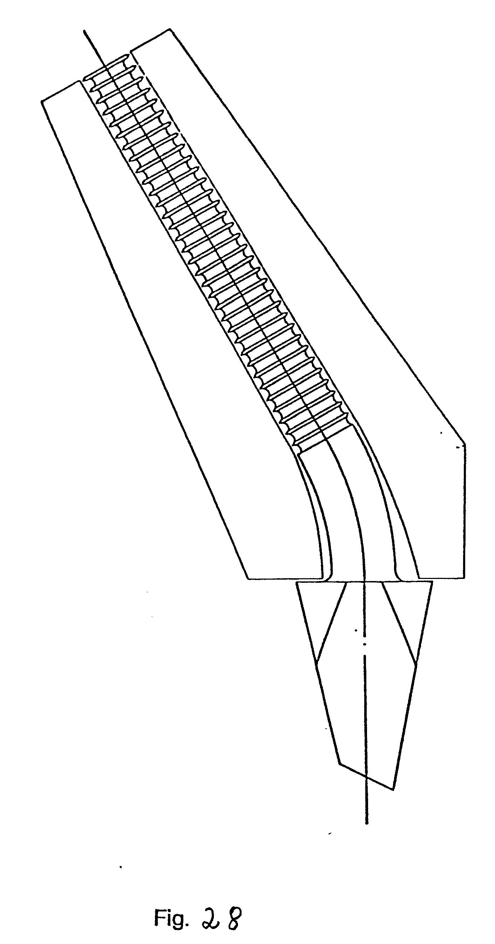

Figur 28 zeigt Seitenansicht des Stiftaufbaus in der Zahnwurzel (Kopf nach rückwärts gebogen).

Der in den Figuren dargestellte Stab weist einen Kopf 6 und einen kegelstumpfförmigen Stift 5 auf. Am unteren Ende 11 des Stiftes 5 ist eine glatte Abschlusszone 12 angeordnet. Hieran schliesst sich eine Rauhzone 9 an, die aus vielen rhombenförmig oder ähnlich gestalteten Schneiden 10 gebildet ist. Die Rauhzone 9 erstreckt sich über den gesamten Umfang etwa ¾ der Mantelfläche des Stiftes 5. An diese Rauhzone 9 schliesst sich eine glatte Biegezone 8 an, deren direkter Übergang zum Kopf 6 aus Festigkeitsgründen bogenförmig ist. Die den Stift 5 überragende Unterseite 4 des Kopfes 6 weist einen scharfkantig-schneidenden Aufrauhungen 13 auf. Der Kopf selbst ist etwa kegelstumpfförmig und weist plane und schräggestellte Seitenflächen 14 bis 17 auf.

Der Stab findet zahlreiche Verwendungsmöglichkeiten. Besonders ist es möglich, ihn wegen seiner festen Verbindung zum Zahnstumpf zur Korrektur von allen möglichen Fehlstellungen der Frontzähne im Ober- und Unterkiefer zu verwenden. Ragen beispielsweise die vorderen Schneidezähne des Oberkiefers einer Person weit über den Unterkiefer hinaus vor, so wird der Stab in den durch Ausschleifen erweiterten Wurzelkanal des abgeschnittenen Zahnstumpfes eingeführt und dabei der über den Zahnstumpf hinausragende Kopf des Stabes gegenüber dem Stift abgebogen. Bringt man nun eine Krone über diesen abgebogenen Kopf des Stabes, so ist der somit gebildete Schneidezahn nicht mehr vorstehend, sondern hat die gewünschte Stellung gegenüber dem Unterkiefer. Die Zahnwurzel verbleibt bei dieser Verwendungsmöglichkeit in ihrer ursprünglichen Stellung, so dass die gewünschte Korrektur bei Erhaltung des Zahnes möglich ist.

Ebenso wird die Zahnwurzel erhalten, wenn die Zahnkrone teilweise durch Karies oder durch einen Unfall zerstört wurde.

Befindet sich bereits ein Eiterherd an der Spitze der Zahnwurzel, so wird dieses sogen. Granulom entfernt und der erfindungsgemässe Stab in den Wurzelkanal des Zahnstumpfes eingeführt. Hierzu wird der Wurzelkanal auf an sich bekannte Weise mit einer Wurzelkanalreibahle ausgehöhlt, bis er die gewünschten Masse aufweist. Derartige Wurzelkanal-Reibahlen entsprechen bestimmten DIN-Normen und sind in verschiedenen Grössen erhätlich. Angepasst an derartige Wurzelkanal-Reibahlen wird der Durchmesser des Stiftes 5 gewählt, so dass es dem Zahnarzt auf einfache Weise möglich ist, nachdem der Wurzelkanal durch die Reibahlen vorerweitert worden ist, den Stift 5 einzusetzen.

Die Oberflächen der Rauhzone 9 des Stiftes 5 schmirgelt beim Einsetzen die Oberfläche des Wurzelkanals aus und sitzt anschliessend fest in dem Wurzelkanal. Die Oberfläche der Rauhzone 9 weist die genannten Schneiden 10 auf. Die Stiftform selbst entspricht einer derartigen Form von bekannten DIN-Bohrern (Reibahlen). Auf diese Weise wirkt der Stift 5 bei seiner Einführung in den Wurzelkanal wie ein Feinbohrer. Aufgrund der Fräsung am Stift 5 (Rauhzone) sitzt der gesamte Stab fest im Zahn. Die Schulterfläche an der Unterseite 4 des Kopfes 6 weist die genannten Einschliffe auf, damit beim Einsetzen des Stabes in die Zahnwurzel der Stabkopf sich einschmirgelnd satt auf dem Restzahn aufsitzt.

Für den Fall, dass oberhalb der Wurzelspitze sich ein Knochenhohlraum gebildet hat oder dass es durch einen Unfall zu einem Bruch der Zahnwurzel gekommen ist, eignet sich der neue Stiftaufbau ebenfalls in idealer Weise.

Im ersteren Fall wird durch einen überlangen Stift der Stift in die gegenüberliegende Knochenwand eingeschmirgelt. Im zweiten Fall wird das Bruchstück der Wurzelspitze entfernt und ebenfalls ein überlanger Stift eingesetzt. In jedem Fall kommt es dadurch zu einer Wiederbefestigung des Wurzelstumpfes, wodurch gleichzeitiger Kronenaufbau ermöglicht wird.

Durch die Verwendung von Titan wird eine bessere Wunheilung an der Wurzelspitze gewährleistet, denn hier tritt Metall in direkten Kontakt mit den Körperflüssigkeiten. Es ist keine Reaktion des Körpers gegen Titan zu erwarten und die guten Materialeigenschaften des Titan hergestellten Stabes. Vorteilhafterweise wird zum Stiftaufbau Reintitan verwendet (99,6% Titan for surgical Im-plants).

Im folgenden wird die Bedeutung der Erfindung weiterhin dargelegt:

Der erste vordere Backenzahn des Oberkiefers beiderseits, gelegentlich auch der zweite vordere Backenzahn, ist, wenn das Zahnmark infolge einer Karies erkrankt ist und sich an den Wurzelspit-zen ein Eiterherd gebildet hat, nur schwer zu behandeln. Wenn dieser Zahn entfernt wird, ist er weiterhin nur schwierig prothetisch zu ersetzen. Es liegt deswegen im hohen Interesse des Patienten, diesen Zahn zu erhalten.

Für die Behandlung bei Erhaltungsabsicht des Zahnes liegt die Schwierigkeit darin, dass dieser Zahn zwei Wurzeln besitzt. Diese sind gewöhnlich sehr dünn und weisen je einen engen Wurzelkanal auf. Eine Abformung der erweiterten Wurzelkanäle entsprechend der oben dargestellten konventionellen Methode ist deswegen äusserst schwierig und ungenau bei geringer Wahrscheinlichkeit auf Erfolg.

Auf Grund der Erfindung ist es möglich, einen derart erkrankten Zahn einfach und sicher operativ zu behandeln und für die Aufnahme einer künstlichen Zahnkrone vorzubereiten.

Im einzelnen wird dabei also die Zahnwurzel erhalten, wenn die Zahnkrone durch Karies oder gelegentlich auch durch einen Unfall zerstört wurde. Befindet sich bereits ein Eiterherd an der Spitze der Zahnwurzel, so wird dieser sogenannte Granulom entfernt und die erfindungsgemässe Vorrichtung in die Wurzelkanäle des Zahnstumpfes eingebracht. Hierzu werden die Wurzelkanäle auf an sich bekannte Weise mit einer Wurzelkanalreibahle ausgehöhlt, bis sie die ge-wünschten Masse aufweisen. Derartige Wurzel-kanalreibahlen entsprechen bestimmten DIN-Normen und sind in verschiedenen Grössen erhältlich. Angepasst an diese Wurzelkanal-Reibahlen werden die Durchmesser und Länge der Stifte gewählt, so dass es dem Zahnarzt auf einfache Weise möglich ist, die Stifte einzusetzen und zu verspannen, nachdem die Wurzelkanäle durch die Reibahlen vorerweitert worden sind. Dabei kann auch gelegentlich eine Stellungsanomalie eines solchen Zahnes (z.B. eine Drehung um die Längsachse des Zahnes) ausgeglichen werden.

Erfindungsgemäss ist es nunmehr möglich, den Patienten sofort, also ohne provisorischen Stiftkronenersatz, mit einem sofort fertigen Stiftaufbau in einer Sitzung zu versorgen. Durch die beschriebene Verarbeitung kommt es schliesslich zu einer glatten Wundheilung an der Wurzelspitze.

**Patentansprüche**

1. Stabförmige Vorrichtung aus Reintitan oder Titanlegierungen zum Befestigen einer künstlichen Zahnkrone auf bzw. in einer Zahnwurzel, mit einem Kopf (6) und einem kegelförmigen Stift (5), wobei der Kopf (6) an seiner Unterseite (4) rundherum den Stift (5) überragt, und wobei der Stift (5) über seinem gesamten Umfang auf einem Teil seiner Länge eine aus Schneiden gebildete Rauhzone (9) und zwischen dem Kopf (6) und der Rauhzone (9) eine glatte Biegezone (8) aufweist, dadurch gekennzeichnet, dass die den Stift (5) überragende Unterseite (4) des Kopfes (6) scharfkantig-schneidende Aufrauhungen (13) aufweist, und dass die Rauhzone aus rhombenförmigen Schneiden (10) oder aus parallelen, senkrecht zur Längsachse des kegelförmigen Stiftes verlaufenden, ringförmigen Schneiden besteht.

2. Stabförmige Vorrichtung nach Anspruch 1, dadurch gekennzeichnet, dass der Übergang vom Kopf (6) zum Stift (5) bogenförmig verstärkt ist.

3. Stabförmige Vorrichtung nach Ansprüchen 1 bis 2, dadurch gekennzeichnet, dass der Stift (5) eine glatte Abschlusszone (12) aufweist.

**Claims**

1. A bar shaped device of pure titanium or titanium alloys for securing an artificial tooth crown on or in a tooth root, with a head (6) and a tapered pin (5), wherein the head (6) projects at its underside all around the pin (5), and wherein the entire periphery of the pin (5) over a part of its length has a rough zone (9) formed by cutting edges and between the head (6) and the rough zone (9) it has a smooth bent zone (8), characterised in that the underside (4) of the head (6) projecting beyond the pin (5) has sharp-edged cutting roughened portions (13), and in that the rough zone comprises rhombic cutting edges (10) or parallel annular cutting edges extending perpendicularly to the longitudinal axis of the tapered pin.

2. A bar shaped device according to Claim 1, characterised in that the transition from the head (6) to the pin (5) is strengthened arcuately.

3. A bar shaped device according to Claims 1 and 2, characterised in that the pin (5) has a smooth end zone (12).

**Revendications**

1. Dispositif en forme de barreau, en titane pur ou en alliages de titane, pour fixer une couronne dentaire artificielle sur ou dans une racine dentaire, comportant une tête (6) et une broche conique (5), la tête (6) dépassant sur sa face inférieure (4) tout autour de la broche (5), et la broche (5) comportant sur toute sa périphérie, sur une partie de sa longueur, une zone rugueuse (9) formée par des arêtes et, entre la tête (6) et la zone rugueuse (9), une zone d'inflexion lisse (8), caractérisé en ce que la face inférieure (4) de la tête (6) dépassant de la broche (5) comporte des rugosités coupantes à la façon d'une arête vive (13), et en ce que la zone rugueuse comprend des arêtes rhomboédriques (10) ou des arêtes annulaires parallèles, s'étendant perpendiculairement à l'axe longitudinal de la broche conique.

2. Dispositif en forme de barreau selon la revendication 1, caractérisé en ce que la transition entre la tête (6) et la broche (5) comporte un renforcement arqué.

3. Dispositif en forme de barreau selon les revendications 1 et 2, caractérisé en ce que la broche (5) comporte une zone terminale lisse (12).

Fig. 1

Fig. 2

**Fig. 3**

**Fig. 4**

Fig. 5

Fig. 6

Fig. 7

Fig. 8

Fig. 9

Fig. 10

Fig. 11

Fig. 12

Fig. 13

Fig. 14

Fig. 15

Fig. 16

Fig. 17

Fig. 18

Fig. 19

Fig. 20

Fig. 21

Fig. 22

Fig. 23

Fig. 24

Fig. 25

Fig. 26

Fig. 27

Fig. 28